# EUROPÄISCHE PATENTSCHRIFT

(11) **EP 2 261 081 B1**
(45) Veröffentlichungstag und Bekanntmachung des Hinweises auf die Patenterteilung: **02.01.2019**
(21) Anmeldenummer: 10003104.6
(22) Anmeldetag: 24.03.2010
(51) Int. Cl.: B60Q 1/08, B60Q 1/14

(54) **Verfahren zum Betreiben einer Beleuchtungseinrichtung**
Method for operating a lighting device
Procédé destiné au fonctionnement d'un dispositif d'éclairage

(30) Priorität: 09.06.2009 DE 102009024352
(43) Veröffentlichungstag der Anmeldung: 15.12.2010
(73) Patentinhaber: Automotive Lighting Reutlingen GmbH, 72762 Reutlingen (DE)
(72) Erfinder: Rosenhahn, Ernst-Olaf, Dr., 72411 Bodelshausen (DE); Hamm, Michael, Dr., 72800 Eningen u.A. (DE)
(74) Vertreter: DREISS Patentanwälte PartG mbB

(56) Entgegenhaltungen:
- EP-A2- 1 403 135
- EP-A2- 2 067 660
- WO-A1-2005/075246
- DE-A1-102004 056 314
- DE-A1-102005 014 754
- DE-A1-102006 003 646
- DE-A1-102006 021 694
- DE-A1-102006 022 022
- DE-A1-102006 039 182
- DE-A1-102007 008 542
- DE-U1- 29 824 081
- US-A1- 2003 107 323

## Beschreibung

Die vorliegende Erfindung betrifft ein Verfahren zum Betreiben einer Beleuchtungseinrichtung für ein Kraftfahrzeug nach dem Oberbegriff des Anspruchs 1. Außerdem betrifft die Erfindung eine Steuer- und Regeleinrichtung zum Betreiben einer Beleuchtungseinrichtung nach dem Oberbegriff des Anspruchs 7. Ein solches Verfahren und eine solche Steuer- und Regeleinrichtung sind aus der DE 298 24 081 U1 bekannt.

Das Lichtmodul kann dabei als ein Reflexionsmodul umfassend mindestens eine Lichtquelle zum Aussenden von Lichtstrahlen sowie mindestens eine Primäroptik, bspw. in Form eines Reflektors, zum Bündeln der ausgesandten Lichtstrahlen, ausgebildet sein. Alternativ kann das Lichtmodul als ein Projektionsmodul umfassend zusätzlich zu der mindestens einen Lichtquelle und der mindestens einen Primäroptik mindestens eine Sekundäroptik, bspw. in Form einer Projektionslinse zum Abbilden der gebündelten Lichtstrahlen auf einer Fahrbahn vor dem Fahrzeug, ausgebildet sein.

Ein Kraftfahrzeugscheinwerfer der eingangs genannten Art ist aus der nachveröffentlichten DE 10 2009 008 631 A1 bekannt, auf die hiermit bezüglich Aufbau und Funktion eines Projektionsmoduls ausdrücklich Bezug genommen wird.

Für hochwertige Kraftfahrzeuge sind Scheinwerfer mit LED-Lichtquellen für Abblendlicht- und Fernlichtfunktion am Markt bekannt, die eine qualitativ hochwertige Lichtverteilung ermöglichen. Aufgrund der begrenzten Leuchtdichte der LEDs ist heute noch für ein Abblendlicht eine Kombination aus mehreren Leuchtdiodenanordnungen notwendig, um die vom Gesetzgeber geforderte Ausleuchtung zu erreichen. Dabei umfasst jede Leuchtdiodenanordnungen mindestens eine LED oder mindestens ein LED-Array.

So ist es beispielsweise möglich, ein Abblendlicht aus je einer Leuchtdiodenanordnungen für die Vorfeldausleuchtung, für die Seitenausleuchtung und einem sogenanntes Reichweitenmodul (zur Reichweitenerhöhung des Abblendlichts) mit beispielsweise drei LED-Arrays zusammenzusetzen. Wenn diese drei Leuchtdiodenanordnungen zusammen betrieben werden, ergibt sich ein sehr leistungsfähiges Abblendlicht.

Dieses Abblendlicht hat, trotz des guten Wirkungsgrades der LEDs eine erhebliche Energieaufnahme zur Folge. So hat beispielsweise allein das Reichweitenmodul eine Leistungsaufnahme von etwa 23 Watt. Hinzu kommt der Energiebedarf für die Vorfeldausleuchtung und die Seitenausleuchtung, sodass ein LED-Abblendlicht heutzutage in der Summe eine Leistungsaufnahme von über 50 Watt hat.

Der Erfindung liegt die Aufgabe zu Grunde, ein Verfahren zum Betrieben eines LED-Scheinwerfers, insbesondere eines Abblendlichts, bereitzustellen, dass den Energiebedarf verringert, ohne Einbußen an der Sicherheit bei Nachtfahrten und bei gleichzeitig Einhaltung der gesetzlich vorgeschriebenen Lichtverteilungen.

Diese Aufgabe wird erfindungsgemäß mit einem Verfahren mit den Merkmalen des Anspruchs 1 gelöst. Das Erfassen der Fahrsituation des Kraftfahrzeugs erfolgt vorzugsweise kontinuierlich. Es ist aber auch denkbar, dass das Erfassen der Fahrsituation zu diskreten Zeitpunkten erfolgt. Diese können bspw. regelmäßig gewählt werden.

Durch das erfindungsgemäße Verfahren ist es möglich, den von dem Scheinwerfer bereitgestellten Lichtstrom, den tatsächlichen Anforderungen des Fahrers an ein Abblendlicht in Abhängigkeit von der Fahrsituation anzupassen und insbesondere mit abnehmender Fahrzeuggeschwindigkeit die Leistung des Abblendlichts entsprechend zu reduzieren.

Dadurch wird das elektrische Bordnetz und der elektrische Energiespeicher des Kraftfahrzeugs entlastet. Letzteres ist insbesondere bei Hybrid- oder Elektrofahrzeugen von besonderer Bedeutung, da sich die Reichweite eines mit einem erfindungsgemäßen Abblendlicht ausgerüsteten Elektrofahrzeugs durch die Erfindung vergrößert. Auch bei Fahrzeugen mit einer herkömmlichen Brennkraftmaschine, die über eine Start-Stop-Funktion verfügen, ist das erfindungsgemäße Verfahren besonders vorteilhaft, da beim Stillstand des Kraftfahrzeugs, die Leistung des Abblendlichts deutlich reduziert werden kann, und somit das Bordnetz für einen erneuten Start der Brennkraftmaschine entlastet wird. Selbstverständlich kann auch im Stand des Fahrzeugs eine Mindestausleuchtung durch die Scheinwerfer sichergestellt werden.

Besonders vorteilhafterweise ist vorgesehen, dass die Beleuchtungseinrichtung mehrere LED-Projektionsmodule aufweist, wobei jeder Leuchtdiodenanordnung eine Stromversorgung zugeordnet ist, die separat geregelt beziehungsweise gesteuert wird. Dadurch ist es zum Beispiel möglich, bei langsamer Fahrt das Reichweitenmodul des Abblendlichts vollständig abzuschalten und dadurch insgesamt eine elektrische Leistung von etwa 46 Watt (2 Scheinwerfer x jeweils 23 Watt) einzusparen.

Diese Energieeinsparung geht nicht zu Lasten der Sicherheit, da erfindungsgemäß das Reichweitenmodul nur bei niedrigen Fahrzeuggeschwindigkeiten, wenn der Fahrer ohnehin nur das unmittelbare Vorfeld vor dem Fahrzeug aufmerksam beobachtet, mit stark reduzierter Leistung betrieben wird. Diese Änderung der Lichtverteilung und des Lichtstroms ist auch in Übereinstimmung mit den gesetzlichen Regelungen, denn die ECE R123 sieht reduzierte lichttechnische Anforderungen für den Stadtbetrieb vor.

Ein besonders einfach und zuverlässig zu erfassender Parameter zur erfindungsgemäßen Steuerung der Leistung des Abblendlichts ist die Fahrgeschwindigkeit des Kraftfahrzeugs. Das Geschwindigkeitssignal liegt sowieso auf dem Datenbus des Kraftfahrzeugs an und wird dort von den verschiedensten Anwendungen (z.B. Anzeige der Fahrgeschwindigkeit; Fahrdynamiksysteme; Getriebesteuerung; Motorsteuerung etc.) eingelesen. Dies bedeutet, dass mit zunehmender Fahrgeschwindigkeit auch die Lichtleistung des Abblendlichts zunimmt, sodass immer ein ausreichend großer Bereich vor dem Kraftfahrzeug ausreichend hell ausgeleuchtet ist.

Des weiteren ist erfindungsgemäß vorgesehen, dass in Abhängigkeit der Fahrsituation mindestens eine Leuchtdiodenanordnung gesondert zugeschaltet oder abgeschaltet wird. Dadurch ist es möglich, den Stromverbrauch des Abblendlichts weiter zu reduzieren. Selbstverständlich muss diese Abschaltung durch die Fahrsituation indiziert sein. So kann vorteilhafterweise die Leuchtdiodenanordnung zur Seitenausleuchtung (z.B. α > 25°) bei Geradeausfahrt abgeschaltet werden.

Es hat sich herausgestellt, dass bei Geradeausfahrt der Fahrer in Fahrtrichtung blickt und somit keinen Nutzen aus einer gleichzeitig erfolgenden Seitenausleuchtung ziehen kann. Daher ist bei Geradeausfahrt das Abschalten der Leuchtdiodenanordnung zur Seitenausleuchtung ohne Einbußen an Komfort und Sicherheit möglich. Umgekehrt gilt natürlich, dass bei einer Abbiegesituation oder bei der Kurvenfahrt das an der kurveninneren Seite des Fahrzeugs installierte Leuchtdiodenanordnung zur Seitenausleuchtung wieder eingeschaltet wird. Damit ist sozusagen eine Kurvenfahrlichtfunktion beim Abblendlicht realisierbar, sodass mit minimalem Energieeinsatz sowohl bei der Geradeausfahrt als auch bei Kurvenfahrt beziehungsweise beim Abbiegen eine sichere Ausleuchtung gewährleistet ist.

In weiterer vorteilhafter Ausgestaltung der Erfindung ist vorgesehen, dass die Beleuchtungseinrichtung eine Leuchtdiodenanordnung zur Vorfeldausleuchtung umfasst und dass mit abnehmender Fahrgeschwindigkeit die Leistung der Leuchtdiodenanordnung zur Vorfeldausleuchtung variiert wird. So wäre es bspw. denkbar, mit zunehmender Fahrzeuggeschwindigkeit die Vorfeldausleuchtung zu reduzieren, da dadurch die subjektiv empfundene Reichweite des Scheinwerfers zunimmt. Auch dadurch wird es ermöglicht die Leistungsaufnahme des Abblendlichts entsprechend den Anforderungen der Fahrsituation entsprechend anzupassen, sodass ohne Abstriche bei Komfort und Sicherheit, der Energiebedarf des Abblendlichts minimiert wird.

Des weiteren wäre es denkbar, die gesamte Lichtverteilung zu dimmen. Versuche haben gezeigt, dass bei langsamer Dimmung über eine mehrere Sekunden andauernde Rampe eine Lichtreduktion von bis zu 30% der Ausgangsintensität vom Fahrer nicht oder kaum wahrgenommen wird. Ebenfalls denkbar wäre es, bei einem Betrieb der Leuchtdiodenanordnung mit reduzierter Leistung die Intensität der Lichtverteilung gezielt nur dann anzuheben, wenn vor dem Fahrzeug im Bereich der Fahrbahn, die das Fahrzeug befährt, Hindernisse (Personen, Verkehrsschilder, andere Verkehrsteilnehmer, Kreuzungen, etc.) detektiert werden. Die Detektion der Hindernisse kann bspw. mittels eines intelligenten Nachtsichtgeräts (auch als Nachtsicht-Assistent oder Night Vision System bezeichnet) erfolgen, das schon jetzt Personen und andere Gegenstände auf der Fahrbahn bzw. am Fahrbahnrand erkennt und dem Fahrer aktiv anzeigt. Hindernisse können auch mit Fern- oder Nahbereichsradar, optischer Kameraüberwachung oder geeigneter Ultraschallsensoren von bereits jetzt in Fahrzeugen eingesetzten Fahrerassistenzsystemen (z.B. einem Bremsassistenten zur Veranlassung einer aktiven Bremsung bei Hindernissen vor dem Fahrzeug oder einem intelligenten Tempomat (Adaptive Cruise Control)) detektiert werden. Die auf diese Weise gewonnen Informationen liegen am Datenbus des Fahrzeugs an und können für die erfindungsgemäße Steuerung/ Regelung der Leistung der mindestens einen Leuchtdiodenanordnung des Scheinwerfers genutzt werden.

In weiterer vorteilhafter Ausgestaltung des erfindungsgemäßen Verfahrens umfasst die Beleuchtungseinrichtung eine Leuchtdiodenanordnung, insbesondere ein Leuchtdiodenarray mit mehreren Leuchtdioden zur Reichweitenerhöhung des Abblendlichts, und wird die Leuchtdiodenanordnung zur Reichweitenerhöhung des Abblendlichts abgeschaltet oder mit stark reduzierter Leistung betrieben, wenn das Fahrzeug hinter einem anderen Fahrzeug herfährt und/oder in einer Straße mit einer stationären Straßenbeleuchtung befindet. Dadurch kann die Energieeinsparung noch deutlich vergrößert werden. Zur Erkennung eines vorausfahrenden Fahrzeugs oder einer stationären Straßenbeleuchtung können ohnehin im Fahrzeug vorhandene Systeme, wie zum Beispiel eine Kamera, die auch für andere Funktionen wie einen Spurhalteassistenten oder zur Erkennung von Verkehrszeichen eingesetzt wird, herangezogen werden. Dadurch werden keine nennenswerten zusätzlichen Hardwarekosten generiert.

Es hat sich erwiesen, dass bei einer Kolonnenfahrt, der hinter einem anderen Fahrzeug herfahrende Fahrer sich hauptsächlich an dem vorausfahrendem Fahrzeug orientiert und daher eine weniger helle Beleuchtung des vor dem Fahrzeug befindlichen Straßenabschnitts ausreichend ist.

Die Erfindung zeichnet sich insbesondere dadurch aus, dass das Verfahren nur ausgeführt wird, wenn sich das Fahrzeug innerhalb einer Ortschaft befindet. Dann nämlich ist es möglich, in Übereinstimmung mit den gesetzlichen Bestimmungen das Abblendlicht der Fahrsituation anzupassen. Außerdem sind in geschlossenen Ortschaften die durchschnittlichen Fahrgeschwindigkeiten geringer als außerhalb geschlossener Ortschaft.

Zur Erkennung, ob sich das Fahrzeug innerhalb einer oder außerhalb einer geschossenen Ortschaft befindet, können beispielsweise Navigationssysteme herangezogen werden, in denen üblicherweise die Ortsgrenzen in den Navigationssystemen beziehungsweise den zugehörigen digitalisierten Karten eingezeichnet sind.

Die Eingangs genannte Aufgabe wird ebenfalls durch eine Steuer- und eine Regeleinrichtung für eine Beleuchtungseinrichtung eines Kraftfahrzeugs gelöst, welches nach einem der erfindungsgemäßen Verfahren arbeitet.

Verschiedene bevorzugte Ausführungsbeispiele der Erfindung werden nachfolgend anhand der Figuren näher erläutert. Es zeigen:
- Fig. 1: ein erfindungsgemäßes Projektionsmodul gemäß einer ersten bevorzugten Ausführungsform in einer perspektivischen Ansicht;
- Fig. 2: das Projektionsmodul aus Figur 1 im Längsschnitt;
- *Fig. 3*: ein erfindungsgemäßes Projektionsmodul gemäß einer zweiten bevorzugten Ausführungsform in einer perspektivischen Ansicht;
- Fig. 4: das Projektionsmodul aus Figur 3 im Längsschnitt und
- Fig. 5: ein Ausführungsbeispiel eines erfindungsgemäßen Verfahrens.

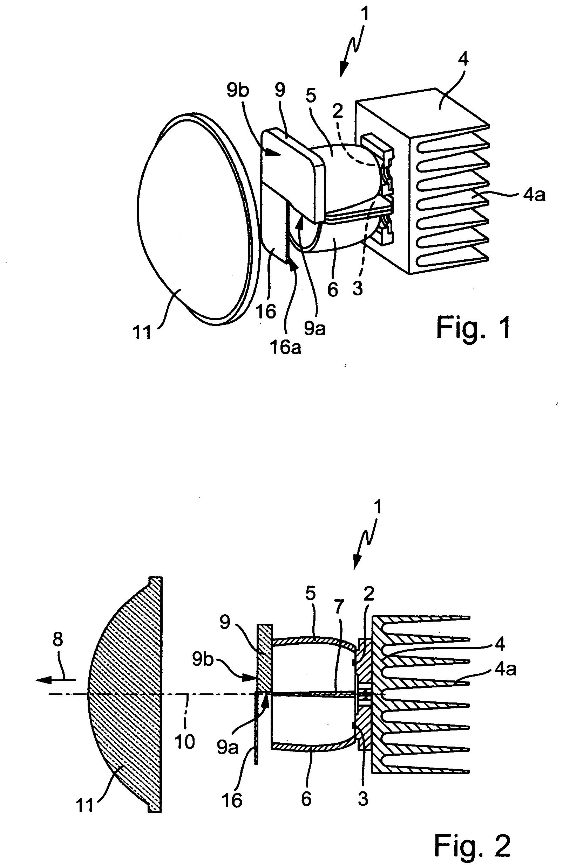

In den Figuren 1 bis 4 werden Projektionsmodule für einen Kraftfahrzeugscheinwerfer mit mehreren Lichtquellen beschrieben, die unabhängig voneinander geschaltet werden können und jeweils eine eigene fokussierende Primäroptik besitzen. Die Lichtquellen sind vorzugsweise als Halbleiterlichtquellen (LEDs oder LED-Arrays, wobei ein LED-Array mehrere vorzugsweise matrixartig angeordnete LEDs umfasst) ausgebildet. Die Primäroptiken fokussieren das von den LEDs ausgestrahlte Licht in der Brennebene einer Sekundäroptik, die bspw. als eine abbildenden Linse ausgebildet ist. Die Linse projiziert die von den fokussierenden Primäroptiken gebildete Lichtverteilung auf die Straße. Die fokussierenden Primäroptiken werden nachfolgend auch als Vorsatzoptiken bezeichnet und können als Reflektoren oder Linsen nach dem Reflexions- bzw. Projektionsprinzip ausgeführt sein.

In den Figuren ist das Projektionsmodul in seiner Gesamtheit mit dem Bezugszeichen 1 bezeichnet. Es umfasst eine erste Gruppe von einer oder mehreren LEDs 2 und eine zweite Gruppe von einer oder mehreren LEDs 3. Die LEDs 2, 3 sind zum Zwecke der Wärmeableitung während des Betriebs der LEDs 2, 3 auf einem Kühlkörper 4 angeordnet. Der Kühlkörper 4 ist aus einem gut Wärme leitenden Material, insbesondere aus einem Metall, gefertigt und weist Kühlrippen 4a zur Vergrößerung der Oberfläche und zur Verbesserung der Kühlwirkung auf. Der Kühlkörper 4 kann mittels eines Lüfters (nicht dargestellt) aktiv gekühlt werden.

Bei dem in den Figuren 1 und 2 dargestellten Ausführungsbeispiel sind die fokussierenden Primäroptiken jeweils als Reflektoren 5, 6, insbesondere als Halbschalenreflektoren, ausgebildet. Selbstverständlich können die Primäroptiken 5, 6 auch jeweils einzeln oder beide als Optikelement in Form einer totalreflektierenden Vorsatzoptik, insbesondere als Lichtleiter oder Glaskörper, ausgebildet sein. In einer im Wesentlichen horizontalen Ebene umfassend eine optische Achse 10 des Projektionsmoduls 1 ist eine Trennwand 7 angeordnet, die zumindest einen Teil der Fläche zwischen den beiden Reflektoren 5, 6 abdeckt. Die Trennwand 7 ist vorzugsweise reflektierend beschichtet. In Lichtaustrittsrichtung 8 nach der oberen, der ersten Lichtquellengruppe 2 zugeordneten Primäroptik 5 ist ein als Lichtleiter ausgebildetes Optikelement 9 angeordnet. Das Optikelement 9 besteht vorzugsweise aus einem transparenten Material, bspw. einem Kunststoff oder Glas. Es hat in Lichtaustrittsrichtung 8 betrachtet die Form eines Rechtecks und in perspektivischer Ansicht die Form eines Quaders. Eine Längsseite (Lichteinkoppelfläche) des Optikelements 9 verdeckt die Lichtaustrittsfläche der ersten Primäroptik 5 praktisch vollständig, so dass das gesamte von der ersten Lichtquellengruppe 2 ausgesandte Licht über die Lichteinkoppelfläche in das Optikelement 9 eingekoppelt wird.

Das eingekoppelte Licht wird zumindest teilweise an einer totalreflektierenden Unterseite 9a des Optikelements 9 totalreflektiert und dann in Lichtaustrittsrichtung 8 durch eine Lichtauskoppelfläche 9b des Optikelements 9 aus diesem ausgekoppelt. Ein Teil des eingekoppelten Lichts gelangt von der Lichteinkoppelfläche direkt zur Lichtauskoppelfläche 9b und wird auf seinem Weg durch das Optikelement 9 lediglich geringfügig abgelenkt. Die Unterseite 9a des Optikelements 9 hat in einer imaginären Schnittebene quer zur optischen Achse 10 einen dem Verlauf der Hell-Dunkel-Grenze entsprechenden Verlauf. Die Kante des Optikelements 9, die zur Erzeugung der Hell-Dunkel-Grenze dient, ist fett hervorgehoben und mit dem Bezugszeichen 9f bezeichnet.

In Lichtaustrittsrichtung nach dem Optikelement 9 ist eine Sekundäroptik in Form einer Projektionslinse 11 angeordnet. Diese projiziert die aus der Auskoppelfläche 9b des Optikelements 9 austretende Strahlung als asymmetrische Abblendlicht-Lichtverteilung auf die Fahrbahn. Je nach dem Verlauf der totalreflektierenden Unterseite 9a des Optikelements 9 kann der Verlauf der Hell-Dunkel-Grenze variieren. Vorzugsweise umfasst die Hell-Dunkel-Grenzen zwei in vertikaler Richtung zueinander versetzt verlaufende horizontale Abschnitte, wobei der Übergang zwischen den beiden Abschnitten entweder einen schrägen (z.B. 15°-Anstieg) oder einen vertikalen (z.B. stufenförmiger Anstieg) Verlauf hat. Denkbar ist auch eine Hell-Dunkel-Grenze mit einem einfachen geraden horizontalen Verlauf.

Um das in den Figuren 1 und 2 dargestellte Lichtmodul 1 zur Erzeugung einer weiteren Lichtverteilung umzuschalten, wird zusätzlich zu der ersten Lichtquellengruppe 2 die zweite Gruppe an Lichtquellen 3 aktiviert.

Die Ausgestaltung und Anordnung der Trennwand 7 zwischen den beiden Primäroptiken 5, 6 verhindert in dem dargestellten Ausführungsbeispiel der Figuren 1 und 2 in erster Linie, dass Licht der Abblendlicht-LEDs 2 am Optikelement 9 vorbei auf die Linse 11 trifft, da dieses Licht sonst oberhalb der Hell-Dunkel-Grenze 13 sichtbar wäre und somit eine Blendung anderer Verkehrsteilnehmer verursachen würde. Außerdem verhindert die Trennwand 7, dass von den Fernlicht-LEDs 3 ausgesandtes Licht über die der ersten Primäroptik 5 zugewandte Einkoppelfläche in das Optikelement 9 eintritt. Selbstverständlich wäre es jedoch auch denkbar, dass ein Teil des von den Fernlicht-LEDs 3 ausgesandten Lichts von dem Reflektor 6 auf die Einkoppelfläche des Optikelements 9 reflektiert und über diese in das Optikelement 9 eingekoppelt werden.

Wenn die Fernlicht-LEDs 3 zusätzlich zu den Abblendlicht-LEDs 2 aktiviert sind, vermischen sich in dem Optikelement 9 die Strahlengänge der Abblendlicht-LEDs 2 und der Fernlicht-LEDs 3 und die Hell-Dunkel-Grenze verwischt bzw. verschwindet vollständig. Es entsteht eine Fernlicht-Lichtverteilung ohne störende dunkle oder farbige Linien an der Stelle der Abblendlicht-Hell-Dunkel-Grenze.

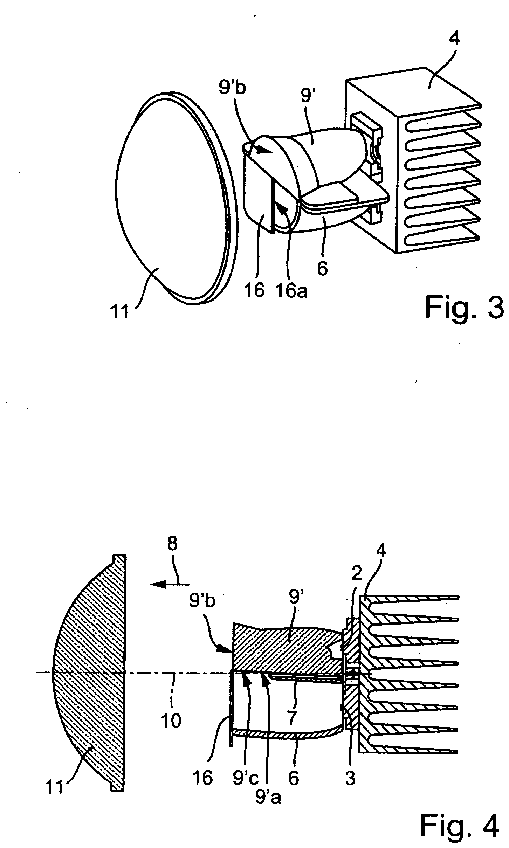

Vorteilhaft sind auch als Vorsatzlinsen ausgebildete Primäroptiken, in denen der Strahlengang geteilt wird, wobei ein Strahlenbündel durch eine Linse projiziert wird und weitere Strahlenbündel an einer totalreflektierenden Reflektorfläche reflektiert werden. Eine entsprechende Ausführungsform ist in den Figuren 3 und 4 dargestellt. Dabei ist statt des Reflektors 5 ein Optikelement 9' in Form einer Vorsatzlinse vorgesehen. In diesem Fall ist das Optikelement 9 in die den Abblendlicht-LEDs 2 zugeordnete Primäroptik integriert. Das von den Abblendlicht-LEDs 2 ausgesandte Licht wird in das Optikelement 9' eingekoppelt und nach Totalreflexion an der äußeren Umfangsfläche des Optikelements 9' und an der Totalreflexionsfläche 9'a über die Auskoppelfläche 9'b ausgekoppelt. Durch Variation der Form und/oder des Verlaufs der Flächen 9'a und 9'b kann eine Anpassung der Lichtverteilung erzielt werden. Dadurch ist es bspw. möglich, das zentrale Strahlenbündel zu fokussieren. Selbstverständlich ist es auch möglich, das Abblendlicht aus mehreren Projektionsmodulen zusammenzusetzen (nicht dargestellt).

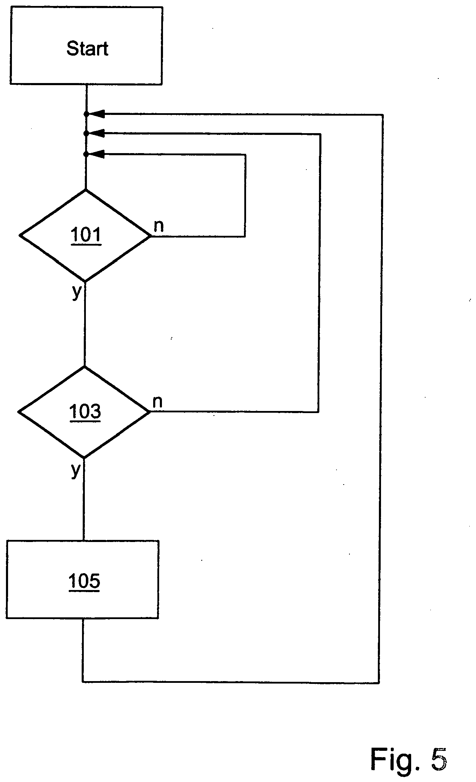

In Figur 5 ist ein Ablaufdiagramm eines Ausführungsbeispiels eines erfindungsgemäßen Verfahrens dargestellt.

Das erfindungsgemäße Verfahren betrifft die Energieeffiziente Steuerung und Regelung einer Beleuchtungseinrichtung, sodass die Durchführung dieses Verfahrens nur dann Sinn macht, wenn die das Abblendlicht des Fahrzeugs ohnehin eingeschaltet ist. Unter dieser Voraussetzung beginnt das erfindungsgemäße Verfahren in einem Startblock. In einer ersten Verzweigung 101 wird abgefragt, ob sich das Fahrzeug innerhalb einer Ortschaft fährt oder nicht. Wenn diese Frage verneint wird, befindet sich das Fahrzeug außerhalb einer geschlossenen Ortschaft und die Lichtleistung des Abblendlichts kann nicht reduziert werden und das Verfahren verzweigt erneut zum Startblock.

Wenn sich das Fahrzeug innerhalb einer geschlossenen Ortschaft befindet, was beispielsweise durch die entsprechende Information eines Navigationssystems leicht feststellbar ist, verzweigt das Fahrzeug zu einer zweiten Verzweigungsstelle 103. In der zweiten Verzweigungsstelle 103 wird abgefragt, ob eine Fahrsituation vorliegt, die eine Reduktion oder eine Erhöhung der Lichtleistung des Abblendlichts erlaubt beziehungsweise erforderlich macht.

Wenn diese Abfrage verneint wird, verzweigt das Programm das Verfahren wieder an den Anfang des Ablaufsdiagramms vor den ersten Verzweigungsblock 101.

Wenn jedoch eine Fahrsituation vorliegt, welche die Änderung der Leistung des Abblendlichts erlaubt beziehungsweise erfordert, verzweigt das Verfahren zu einem ersten Funktionsblock 105 in dem durch eine entsprechende Ansteuerung der Steuereinrichtung eines oder mehrere Projektionsmodule mit entsprechend geänderter Leistung angesteuert oder eingeschaltet beziehungsweise abgeschaltet wird.

Danach verzweigt das Verfahren wieder an den Anfang und wird erneut durchlaufen. Dieses Verfahren wird somit solange durchlaufen, wie das Abblendlicht eingeschaltet ist, denn das eingeschaltete Abblendlicht ist ja eine Grundvoraussetzung für die Durchführung des erfindungsgemäßen Verfahrens.

Die Kriterien anhand derer entschieden wird, ob eine Fahrsituation vorliegt, welche eine Änderung der Leistung des Abblendlichts angezeigt ist, können verschiedener Art sein. Ein sehr wichtiger, weil sicherheitsrelevant und gleichzeitig einfach erfassbarer Parameter ist die Fahrgeschwindigkeit des Kraftfahrzeugs. So liegt es auf der Hand, dass mit zunehmender Fahrgeschwindigkeit eine größere Leistung des Abblendlichts erforderlich ist. Im Gegenzug liegt es auf der Hand, dass bei einem stehenden Fahrzeug das Abblendlicht lediglich die Funktion einer Positionsleuchte haben könnte und somit auf eine sehr geringe Leitung geregelt werden kann, ohne eine Beeinträchtigung der Sicherheit der Fahrzeuginsassen.

Weitere Kriterien können sein für einzelne Leuchtdiodenanordnungen oder sogar mehrere Leuchtdiodenanordnungen, ob sich das Kraftfahrzeug in einer Geradeausfahrt befindet. Wenn nämlich das Kraftfahrzeug sich in Geradeausfahrt befindet, kann eine Leuchtdiodenanordnung zur Seitenausleuchtung ausgeschaltet werden. Andererseits ist es selbstverständlich wünschenswert bei abbiegen in eine Seitenstraße oder, wenn sich das Kraftfahrzeug in einer Kurvenfahrt befindet, den kurveninneren Straßenrand durch das entsprechende Ansteuern der Leuchtdiodenanordnung zur Seitenanleuchtung besonders hell auszuleuchten.

Schließlich ist eine weitere Möglichkeit zur Reduktion der Leistung des Abblendlichts dann gegeben, wenn die Straße innerhalb der geschlossenen Ortschaft auf der das Fahrzeug sich bewegt, eine stationäre Straßenbeleuchtung hat. Dann nämlich dient die Straßenbeleuchtung zur Ausleuchtung der Straße und die Leistung des Abblendlichts kann entsprechend reduziert werden. Das gleich gilt, wenn das Fahrzeug hinter einem Fahrzeug herfährt, da dann üblicherweise die Beleuchtung des vorausfahrenden Fahrzeugs für den Fahrer des hinteren Fahrzeugs zur Orientierung und Informationsbeschaffung über den Verlauf der Straße herangezogen wird. Auch dann kann die Leistung des Abblendlichts reduziert werden.

Es versteht sich von selbst, entweder einzelne Dioden gedimmt oder sogar ausgeschaltet werden können oder ganze Leuchtdiodenarrays gedimmt oder ausgeschaltet werden können.

Erfindungsgemäß ist weiter vorgesehen, dass der Wechsel der Leistung einzelner Leuchtdiodenanordnungen oder Arrays von Leuchtdioden nicht sprungartig sondern kontinuierlich und langsam erfolgt, damit sich das Auge des Fahrers an die wechselnde Helligkeit gewöhnen kann und sich entsprechend darauf einstellen kann.

Es reicht aus, wenn die Änderung der Helligkeit mit einer zeitlichen Dauer von einigen Sekunden, beispielsweise 3 Sekunden bis 5 Sekunden vonstatten geht. Diese Änderungsgeschwindigkeit ist ausreichend langsam, um die Adaption des Auges ohne weiteres zu ermöglichen und den Effekt für den Fahrer subjektiv nicht wahrnehmbar ablaufen zu lassen.

Das Einsparpotenzial des erfindungsgemäßen Verfahrens beträgt etwa 50 % des Energiebedarfs des Abblendlichts. So wird beispielsweise bei einem Abblendlicht in LED-Technik die Leuchtdiodenanordnung zur Reichweitenerhöhung des Abblendlichts mit einer Leistung von etwa 23 Watt gespeist. Dies bedeutet, dass an beiden Seiten eines Kraftfahrzeugs insgesamt nur für diese Leuchtdiodenanordnung eine Leistung von 46 Watt elektrisch erforderlich ist. Wenn diese Leuchtdiodenanordnungen abgeschaltet werden können, werden demzufolge 46 Watt elektrischer Leistung eingespart.

Wenn man davon ausgeht, dass es möglich ist, für eine Fahrt innerhalb einer geschlossenen Ortschaft ein "Grundlicht" mit 30 Watt elektrischer Leistung ausreichend ist, so ergibt sich allein durch das Abschalten der Leuchtdiodenanordnung für die zur Reichweitenerhöhung eine Energieeinsparung von 43 %. Dies ist eine durchaus relevante Größe, insbesondere, dann wenn das Bordnetz des Kraftfahrzeugs beispielsweise durch Start-Stop-Betrieb, oder aus anderen Gründen stark belastet ist. Entsprechendes gilt auch für Hybrid- oder Elektrofahrzeuge, da insbesondere bei niedrigen Geschwindigkeiten häufig Beschleunigungsvorgänge in der geschlossenen Ortschaften vonstatten gehen und dort besonderes viel elektrische Leistung zum Antrieb erforderlich ist. Außerdem wird der Energiespeicher weniger entleert und die Reichweite entsprechend verlängert.

## Patentansprüche

1. Verfahren zum Betreiben einer Beleuchtungseinrichtung für ein Kraftfahrzeug, die mindestens eine Leuchtdiodenanordnung mit mindestens einer Leuchtdiode (2), eine Stromversorgung für die mindestens eine Leuchtdiodenanordnung (2) und eine Steuer- oder Regeleinrichtung umfasst, wobei das Verfahren die folgenden Schritte umfasst:
- Erfassen (103) einer Fahrsituation des Kraftfahrzeugs und
- Einstellen (105) der Leistung der mindestens einen Leuchtdiodenanordnung in Abhängigkeit von der Fahrsituation, wobei die Beleuchtungseinrichtung mehrere Leuchtdiodenanordnungen (2) aufweist, wobei jeder Leuchtdiodenanordnung (2) eine Stromversorgung zugeordnet ist und die Leistung der Leuchtdiodenanordnungen (2) separat eingestellt wird, wobei die Beleuchtungseinrichtung eine Leuchtdiodenanordnung für eine Vorfeldausleuchtung, eine Leuchtdiodenanordnung für eine Seitenausleuchtung und eine Leuchtdiodenanordnung zur Reichweitenerhöhung aufweist, die gemeinsam ein Abblendlicht erzeugen, **dadurch gekennzeichnet, dass** die Leuchtdiodenanordnung zur Reichweitenerhöhung bei niedrigen Fahrgeschwindigkeiten des Kraftfahrzeugs abgeschaltet oder mit reduzierter Leistung betrieben wird und dass die Leuchtdiodenanordnung zur Reichweitenerhöhung abgeschaltet oder mit reduzierter Leistung betrieben wird, wenn das Fahrzeug hinter einem anderen Fahrzeug herfährt, wobei das Verfahren nur ausgeführt wird, wenn sich das Fahrzeug innerhalb einer Ortschaft befindet.

2. Verfahren nach Anspruch 1, **dadurch gekennzeichnet, dass** die Leistung der mindestens einen Leuchtdiodenanordnung (2,) in Abhängigkeit davon eingestellt wird, ob vor dem Fahrzeug auf der Fahrbahn, die das Fahrzeug befährt, oder in Seitenbereichen der Fahrbahn Hindernisse detektiert werden, wobei bei einem Betrieb der Leuchtdiodenanordnung (2) mit reduzierter Leistung die Intensität der Lichtverteilung nur dann angehoben wird, wenn vor dem Fahrzeug im Bereich der Fahrbahn Hindernisse detektiert werden.

3. Verfahren nach Anspruch 2, **dadurch gekennzeichnet, dass** die Hindernisse mittels eines intelligenten Nachtsichtgeräts detektiert werden.

4. Verfahren nach einem der vorhergehenden Ansprüche, **dadurch gekennzeichnet, dass** mit zunehmender Fahrgeschwindigkeit die Leistung der Leuchtdiodenanordnung zur Vorfeldausleuchtung reduziert wird.

5. Verfahren nach einem der vorhergehenden Ansprüche, **dadurch gekennzeichnet, dass** bei Geradeausfahrt die Leuchtdiodenanordnung zur Seitenausleuchtung abgeschaltet wird.

6. Verfahren nach einem der vorhergehenden Ansprüche, **dadurch gekennzeichnet, dass** die Leuchtdiodenanordnung zur Reichweitenerhöhung des Abblendlichts abgeschaltet oder mit stark reduzierter Leistung betrieben wird, wenn sich das Fahrzeug in einer Straße mit stationärer Straßenbeleuchtung befindet.

7. Steuer- oder Regeleinrichtung für eine Beleuchtungseinrichtung für ein Kraftfahrzeug, die mindestens eine Leuchtdiodenanordnung (2) mit mindestens einer Leuchtdiode, **dadurch gekennzeichnet, dass** die Steuer- oder Regeleinrichtung zur Ausführung eines Verfahrens nach einem der Ansprüche 1 bis 6 programmiert ist.

## Claims

1. Method for operating a lighting device for a motor vehicle, which lighting device comprises at least one light emitting diode arrangement having at least one light emitting diode (2), a power supply for the at least one light emitting diode arrangement (2) and an open-loop or closed-loop control device, the method comprising the following steps:
- detecting (103) a driving situation of the motor vehicle and
- adjusting (105) the output of the at least one light emitting diode arrangement depending on the driving situation, the lighting device comprising a plurality of light emitting diode arrangements (2), a power supply being assigned to each light emitting diode arrangement (2) and the output of the light emitting diode arrangements (2) being separately adjusted, the lighting device comprising a light emitting diode arrangement for illumination of a region in front, a light emitting diode arrangement for lateral illumination and a light emitting diode arrangement for increasing the range, which together produce a low-beam light, **characterized in that**, when the motor vehicle is traveling at low speeds, the light emitting diode arrangement for increasing the range is switched off or operated with reduced output, and **in that** the light emitting diode arrangement for increasing the range is switched off or operated with reduced output when the vehicle is traveling behind another vehicle, the method being carried out only if the vehicle is located within a built-up area.

2. Method according to claim 1, **characterized in that** the output of the at least one light emitting diode arrangement (2,) is adjusted depending on whether obstacles are detected in front of the vehicle on the roadway on which the vehicle is traveling, or in regions at the sides of the roadway, the intensity of the light distribution being raised, when the light emitting diode arrangement (2) is being operated with reduced output, only if obstacles are detected in front of the vehicle in the region of the roadway.

3. Method according to claim 2, **characterized in that** the obstacles are detected by means of an intelligent night-vision apparatus.

4. Method according to any of the preceding claims, **characterized in that** the output of the light emitting diode arrangement for illumination of the region in front is reduced as the vehicle speed increases.

5. Method according to any of the preceding claims, **characterized in that**, when traveling straight ahead, the light emitting diode arrangement for lateral illumination is switched off.

6. Method according to any of the preceding claims, **characterized in that** the light emitting diode arrangement for increasing the range of the low-beam light is switched off or is operated with a significantly reduced output when the vehicle is in a street having stationary street lighting.

7. Open-loop or closed-loop control device for a lighting device for a motor vehicle, which lighting device comprises at least one light emitting diode arrangement (2) having at least one light emitting diode, **characterized in that** the open-loop or closed-loop control device is programmed to carry out a method according to any of claims 1 to 6.

## Revendications

1. Procédé destiné au fonctionnement d'un dispositif d'éclairage pour véhicule automobile, comprenant au moins un agencement de diodes électroluminescentes pourvu d'au moins une diode électroluminescente (2), une alimentation électrique pour l'agencement de diodes électroluminescentes (2), au moins au nombre de un, et un dispositif de commande ou de régulation, le procédé comprenant les étapes suivantes:
- la détection (103) d'une situation de conduite du véhicule automobile, et
- le réglage (105) de la puissance de l'agencement de diodes électroluminescentes, au moins au nombre de un, en fonction de la situation de conduite, le dispositif d'éclairage comportant plusieurs agencements de diodes électroluminescentes (2), une alimentation électrique étant associée à chaque agencement de diodes électroluminescentes (2) et la puissance des agencements de diodes électroluminescentes (2) étant réglée séparément, le dispositif d'éclairage comportant un agencement de diodes électroluminescentes pour un éclairage du champ proche, un agencement de diodes électroluminescentes pour un éclairage latéral et un agencement de diodes électroluminescentes pour l'augmentation de la portée, lesquels produisent conjointement des feux de croisement, **caractérisé en ce que** l'agencement de diodes électroluminescentes destiné à augmenter la portée est mis hors circuit à de faibles vitesses de déplacement du véhicule ou fonctionne à puissance réduite, et **en ce que** l'agencement de diodes électroluminescentes pour l'augmentation de la portée est mis hors circuit ou fonctionne à puissance réduite lorsque le véhicule avance derrière un autre véhicule, le procédé n'étant exécuté que lorsque le véhicule se trouve dans une localité.

2. Procédé selon la revendication 1, **caractérisé en ce que** la puissance de l'agencement de diodes électroluminescentes (2), au moins au nombre de un, est réglée selon que des obstacles sont ou non détectés devant le véhicule sur la chaussée que le véhicule emprunte, ou dans des zones latérales de la chaussée, l'intensité de la distribution lumineuse n'étant augmentée, en cas de fonctionnement de l'agencement de diodes électroluminescentes (2) à puissance réduite, que si des obstacles sont détectés devant le véhicule dans la zone de la chaussée.

3. Procédé selon la revendication 2, **caractérisé en ce que** les obstacles sont détectés au moyen d'un appareil de vision nocturne intelligent.

4. Procédé selon l'une des revendications précédentes, **caractérisé en ce que** la puissance de l'agencement de diodes électroluminescentes pour l'éclairage du champ proche est réduite à mesure qu'augmente la vitesse de déplacement.

5. Procédé selon l'une des revendications précédentes, **caractérisé en ce que** l'agencement de diodes électroluminescentes pour l'éclairage latéral est mis hors circuit lors d'un déplacement en ligne droite.

6. Procédé selon l'une des revendications précédentes, **caractérisé en ce que** l'agencement de diodes électroluminescentes pour l'augmentation de la portée des feux de croisement est mis hors circuit ou fonctionne à une puissance fortement réduite lorsque le véhicule se trouve sur une route pourvue d'un éclairage public fixe.

7. Dispositif de commande ou de régulation pour un dispositif d'éclairage de véhicule automobile, comprenant au moins un agencement de diodes électroluminescentes (2) pourvu d'au moins une diode électroluminescente (2), **caractérisé en ce que** le dispositif de commande et de régulation est programmé pour l'exécution d'un procédé selon l'une des revendications 1 à 6.
